# EUROPÄISCHE PATENTSCHRIFT

(11) **EP 2 235 774 B1**
(45) Veröffentlichungstag und Bekanntmachung des Hinweises auf die Patenterteilung: **11.10.2017**
(21) Anmeldenummer: 08855905.9
(22) Anmeldetag: 04.12.2008
(51) Int. Cl.: H01M 8/1213, H01M 8/0236, H01M 8/124

(54) **SPERRSCHICHT**
BLOCKING LAYER
COUCHE D'ARRÊT

(30) Priorität: 04.12.2007 DE 102007058596
(43) Veröffentlichungstag der Anmeldung: 06.10.2010
(73) Patentinhaber: CeramTec GmbH, 73207 Plochingen (DE)
(72) Erfinder: KLUGE, Claus, Peter, 95195 Röslau (DE); STOLZ, Stefan, 95679 Waldershof (DE)
(74) Vertreter: Uppena, Franz
(86) Internationale Anmeldenummer: PCT/EP2008/066783
(87) Internationale Veröffentlichungsnummer: WO 2009/071624

(56) Entgegenhaltungen:
- EP-A- 0 889 536
- FR-A- 2 180 488
- US-A- 4 404 267

## Beschreibung

Die Erfindung betrifft eine Sperrschicht in einer Brennstoffzelle zu Verhinderung von Reaktionen zwischen Elektrolyt und Anode und Elektrolyt und Kathode.

Anode und Elektrolyt sowie Kathode und Elektrolyt stehen bei Brennstoffzellenanwendungen im direkten stofflichen Kontakt. Insbesondere sind hier Hochtemperaturbrennstoffzellen, beispielsweise SOFC (Solid Oxide Fuel Cells), mit Arbeitstemperaturen > 400°C zu nennen. Nach dem Stand der Technik reagieren Anode und Elektrolyt sowie Elektrolyt und Kathode bei Temperaturen > 400°C auf festkörperchemische Art und Weise. Diese Reaktion führt dazu, dass Werkstoff der Anoden in den Elektrolyt oder umgekehrt wandern kann, bzw. dass Werkstoff der Kathoden in den Elektrolyt oder umgekehrt wandern kann. Die Auswirkung davon ist die Veränderung der elektrischen Energieausbeute der Brennstoffzellen. Diese Veränderung ist ein Prozess, der durch steigende Temperaturen und/oder anhaltende Dauer beschleunigt wird.

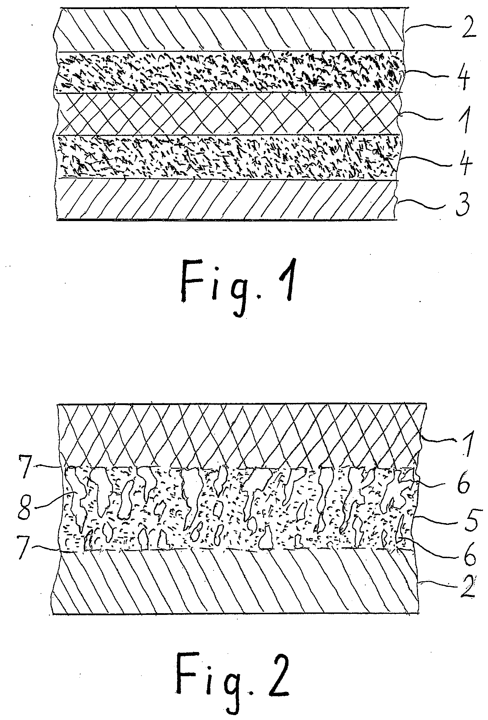

Zur Verhinderung der Diffusion werden derzeit Sperrschichten verwendet, deren Eigenschaft eine möglichst hohe Werkstoffdichte, ein so genanntes dichtes Gefüge, ist, wie es als Stand der Technik in Figur 1 dargestellt ist. Die Figur 1 zeigt schematisch den Schichtaufbau in einer herkömmlichen Brennstoffzelle. Mit 1 ist der Elektrolyt, mit 2 die Anode und mit 3 die Kathode bezeichnet. Die besonders dichte Sperrschicht 4 liegt zwischen Elektrolyt 1 und Anode 2 sowie Elektrolyt 1 und Kathode 3. Es ist allerdings schwierig, einerseits ein dichtes Gefüge zu erzeugen aber andererseits die Schicht nicht so dick zu machen, dass die chemischen Abläufe in der Zelle behindert werden.

In der US 4 404 267 A wird beispielsweise eine Schmelzkarbonatbrennstoffzelle mit einem bestimmten Anodenmaterial offenbart. Die Brennstoffzelle umfasst auch eine poröse Sperrschicht gegen Gasblasen, die verhindern soll, dass sich die jeweiligen zur Anode und zur Kathode geführten Gase vermischen und zu Problemen bei dem Betrieb der Brennstoffzelle führen.

Eine Gaselektrode, die beispielsweise für Brennstoffzellen verwendet werden kann, wird in der FR 2.180.488 A offenbart, die unter anderem eine poröse Sperrschicht umfasst mit der die Diffusion von Elektrolyt zur Elektrode und die entgegengesetzte Diffusion der Reaktionsprodukte von der Elektrode weg gewährleistet.

Die Aufgabe der Erfindung besteht darin, eine Sperrschicht vorzustellen, die die festkörperchemischen Reaktionen zwischen Elektrolyt sowie Anode und Kathode weitestgehend unterbindet.

Die Lösung der Aufgabe erfolgt mit Hilfe der kennzeichnenden Merkmale des ersten Anspruchs, vorteilhafte Ausgestaltungen der Erfindung werden in den abhängigen Ansprüchen beansprucht.

Im Gegensatz zum Stand der Technik wird entsprechend der Erfindung gezielt eine Porosität in die Sperrschicht eingebracht, wie es in Figur 2 dargestellt ist. In Figur 2 liegt zwischen Elektrolyt 1 und Anode 2 eine erfindungsgemäße Sperrschicht 5 mit Poren 6. Mit 7 sind die gedachten Grenzlinien zwischen den einzelnen Schichten bezeichnet. Gegen die Diffusionsrichtung Elektrolyt 1 zur Anode 2 hin ist eine Zunahme der Poren 6 und Porenkanäle 8, der Porosität, zu sehen. Die Sperrschicht 5 enthält somit offenporige und/oder geschlossenporige Bereiche, wodurch der Werkstoff der Sperrschicht 5 eine Gerüststruktur bildet.

Durch die Poren 6 wird ein Mangel an Werkstoff erzeugt, in dem eine Diffusion erfolgen kann, weil nur die durch den Werkstoff der Sperrschicht gebildete Gerüststruktur die Möglichkeit für eine Diffusion bietet. Nicht die Pore 6 als Hohlraum ist der eigentliche Funktionsträger, sondern die Gerüststruktur. Daher ist die Pore, ob offen oder geschlossen, dazu gedacht, Werkstoff zu verdrängen. Durch die Poren werden möglichst schmale festkörperchemische Reaktionspfade geschaffen, die ein freies beziehungsweise großflächiges Diffundieren von Anode in den Elektrolyt oder umgekehrt und/oder Kathode in den Elektrolyt oder umgekehrt behindern.

Die Sperrschicht ist eine elektrochemische Funktionsschicht und besteht bevorzugt aus einer Keramik.

Die Schichtstärke der Sperrschicht beträgt 0,1 bis 40 µm ist. Sie ist abhängig von der Partikelgröße, die wiederum Einfluss auf die Größe der Poren hat. In der Regel kann bei geringer Partikelgröße des Werkstoffs, kleinem Porendurchmesser und großem Porenanteil die Dicke der Sperrschicht gering gewählt werden. Es dürfen keine Kanäle durch offene Poren durch die Sperrschicht hindurch entstehen, die eine Perkolation des Werkstoffs ermöglichen oder einen Kurzschluss verursachen. Ist die Funktionsschicht zu dick, steigt der elektrische Widerstand an und der Energieaustrag aus der Brennstoffzelle wird geringer. Die Dicke und die Porosität sind Parameter, welche als Definition für diese Funktionsschicht heranzuziehen sind.

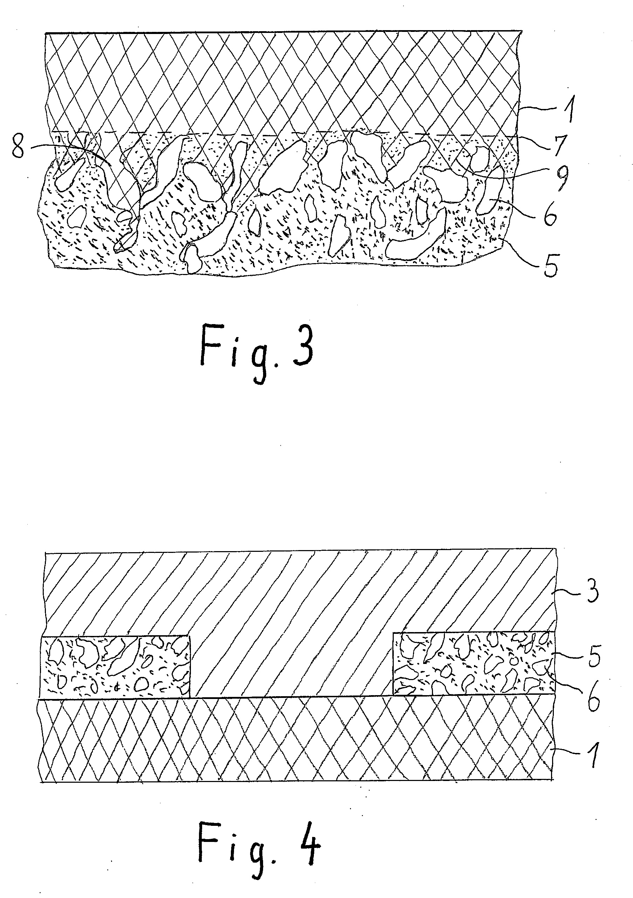

Wie es in Figur 3, einem vergrößerten Ausschnitt der Figur 2, dargestellt ist, ist der Werkstoff der an der Sperrschicht angrenzenden Schicht des Elektrolyt 1 in die offenen Poren 6 und in die in der Sperrschicht gebildeten Porenkanäle 8 eingedrungen, so dass dadurch eine mechanische Verzahnung mit der angrenzenden Sperrschicht 5 stattfindet. Weiterhin ist der Werkstoff des Elektrolyts über die gedachte Grenzlinie 7 zwischen den Poren 6 in den Werkstoff der Sperrschicht 5 eindiffundiert und bildet dort einen Diffusionsbereich 9. Die weitere Diffusion wird aber durch die den Diffusionsweg unterbrechenden Poren 6 verhindert.

Durch die Porosität entstehen, wie bereits erläutert, Materialpfade in der Sperrschicht. Diese verlängern die Diffusionsstrecke für den eindiffundierenden Werkstoff, wie aus den Figuren 2 und 3 ersichtlich ist. Für die Diffusion zwischen zwei Funktionsschichten geht der Weg über die Gerüststruktur, d. h. nicht unbedingt geradlinig. Damit verlängert sich im Einzelfall die Strecke für die Diffusion und eine Pore ist stoppt die Diffusion. Wegen der Wegverlängerung über die Gerüststruktur bietet sich die Möglichkeit, die Schichtstärke der Sperrschicht insgesamt zu vermindern.

Durch die Porosität entsteht eine Oberflächenvergrösserung des Werkstoffs der Sperrschicht. Bei Bulk-Material wird die Oberfläche über Länge - Breite - Dicke definiert. Die Pore ist als Abmagerung des Bulk-Materials zu sehen. Die Funktion von Pore und Gerüst ist vertauscht, d. h. die "Filterwirkung" erfolgt über das Gerüst.

Für die Sperrschicht ist eine Gesamtporosität von 1 bis 55 Volumen-% von besonderer technischer Bedeutung.

Vorteilhaft ist die Porosität gradiert. Die Gradierung kann auf der Basis von zwei unterschiedlichen Funktionen ausgelegt sein: Das erste Prinzip ist die Verzahnung mit den angrenzenden Schichten. Das zweite Prinzip ist die Diffusionsrichtung, d.h., bietet die angrenzende Schicht denjenigen Stoff an, welcher über den Werkstoff der Sperrschicht hinweg diffundieren möchte, so beginnt hier beispielsweise die Sperrschicht mit einem hohem Porenanteil, der sich in Richtung des Bulk-Materials der Sperrschicht vermindert. Da es hier die unterschiedlichsten Möglichkeiten der Gradierung gibt, ist dieses als Beispiel und nicht als Einschränkung anzusehen.

Die Sperrschicht kann zwischen Elektrolyt und Kathode liegen. Sie kann aber auch zwischen Elektrolyt und Anode liegen. Weiterhin kann auch eine Kombination der Lagen vorgesehen sein. Die Sperrschicht kann mittels Siebdruck oder Laminiertechniken oder Coatingverfahren wie Sprühen oder Rollercoating aufgebracht werden.

Der Werkstoff der Sperrschicht ist von besonderer technischer Bedeutung und besteht beispielsweise aus Ceroxid und/oder technischem Ceroxid und/oder dotiertem Ceroxid und/oder Zirkonoxid und/oder technischem Zirkonoxid und/oder dotiertem Zirkonoxid und Mischungen hiervon. Als Dotierungen sind beispielsweise die Oxide von Sm und Gd zu nennen. Technische Stoffe haben immer einen Anteil an Fremdstoffen und Nebenbestandteilen. Ceroxid wird in der Regel aus einem gemahlenen Einkristall gewonnen und hat deshalb die höchste stoffliche Reinheit.

Die Sperrschicht ist teilflächig oder vollflächig auf mindestens einer Oberfläche aufgebracht, wie es aus der Figur 4 ersichtlich ist.

## Patentansprüche

1. Sperrschicht in einer Brennstoffzelle mit einer Schichtanordnung aus Anode, Elektrolyt und Kathode, wobei die Sperrschicht, die eine gezielt eingebrachte Porosität aufweist, (5) eine elektrochemische Funktionsschicht ist, zwischen Elektrolyt (1) und Anode (2) und/oder Elektrolyt (1) und Kathode (3) angeordnet ist und aus Bereichen mit offenen und/oder geschlossenen Poren (6) besteht, wodurch der Werkstoff eine Gerüststruktur bildet, **dadurch gekennzeichnet, dass** die Porosität der Sperrschicht (5) gradiert ist.

2. Sperrschicht nach Anspruch 1 **dadurch gekennzeichnet, dass** die Schichtstärke der Sperrschicht (5) 0,1 bis 40 µm beträgt.

3. Sperrschicht nach Anspruch 1 bis 2 **dadurch gekennzeichnet, dass** die Gesamtporosität der Sperrschicht (5) 1 bis 55 Volumen-% beträgt.

4. Sperrschicht nach einem der Ansprüche 1 bis 3, **dadurch gekennzeichnet, dass** durch die Porosität die Oberfläche des Werkstoffs der Sperrschicht (5) vergrößert ist.

5. Sperrschicht nach Anspruch 1, **dadurch gekennzeichnet, dass** die Porosität in Richtung in die Sperrschicht hinein (5) abnimmt.

6. Sperrschicht nach einem der Ansprüche 1 bis 5, **dadurch gekennzeichnet, dass** ihr Werkstoff aus Ceroxid und/oder technischem Ceroxid und/oder dotiertem Ceroxid und/oder Zirkonoxid und/oder technischem Zirkonoxid und/oder dotiertem Zirkonoxid oder aus Mischungen der angegebenen Stoffe besteht.

7. Sperrschicht nach Anspruch 6, **dadurch gekennzeichnet, dass** der Werkstoff die Oxide von Sm und Gd als Dotierungen enthält.

8. Sperrschicht nach einem der Ansprüche 1 bis 7, **dadurch gekennzeichnet, dass** die Sperrschicht (5) teilflächig oder vollflächig auf mindestens einer Oberfläche des Elektrolyt (1) oder der Anode (2) oder der Kathode (3) aufgebracht ist.

## Claims

1. A blocking layer in a fuel cell having a layer arrangement consisting of an anode, an electrolyte and a cathode, wherein the blocking layer (5), which has a porosity introduced in a targeted manner, is an electrochemical functional layer, is arranged between the electrolyte (1) and anode (2) and/or the electrolyte (1) and cathode (3), and consists of regions with open and/or closed pores (6), as a result of which the material forms a frame structure, **characterised in that** the porosity of the blocking layer (5) is graduated.

2. A blocking layer according to claim 1, **characterised in that** the layer thickness of the blocking layer (5) amounts to 0.1 to 40 µm.

3. A blocking layer according to claim 1 to 2, **characterised in that** the total porosity of the blocking layer (5) amounts to 1 to 55 % by volume.

4. A blocking layer according to one of claims 1 to 3, **characterised in that** the surface of the material of the blocking layer (5) is enlarged by the porosity.

5. A blocking layer according to claim 1, **characterised in that** the porosity decreases in the direction going into the blocking layer (5).

6. A blocking layer according to one of claims 1 to 5, **characterised in that** its material consists of cerium oxide and/or technical cerium oxide and/or doped cerium oxide and/or zirconium oxide and/or technical zirconium oxide and/or doped zirconium oxide or of mixtures of the substances specified.

7. A blocking layer according to claim 6, **characterised in that** the material contains the oxides of Sm and Gd as dopants.

8. A blocking layer according to one of claims 1 to 7, **characterised in that** the blocking layer (5) is applied to part of or all over at least one surface of the electrolyte (1) or the anode (2) or the cathode (3).

## Revendications

1. Couche d'arrêt dans une pile à combustible comportant des couches agencées en anode, électrolyte et cathode, laquelle couche d'arrêt (5), qui présente une porosité introduite à dessein, est une couche fonctionnelle électrochimique, disposée entre l'électrolyte (1) et l'anode (2) et/ou entre l'électrolyte (1) et la cathode (3), et se compose de domaines à pores (6) ouverts et/ou fermés, grâce à quoi le matériau forme une structure de charpente, **caractérisée en ce que** la couche d'arrêt (5) présente un gradient de porosité.

2. Couche d'arrêt conforme à la revendication 1, **caractérisée en ce que** l'épaisseur de la couche d'arrêt (5) vaut de 0,1 à 40 µm.

3. Couche d'arrêt conforme à la revendication 1 ou 2, **caractérisée en ce que** la porosité totale de la couche d'arrêt (5) vaut de 1 à 55 % en volume.

4. Couche d'arrêt conforme à l'une des revendications 1 à 3, **caractérisée en ce que** la porosité du matériau de la couche d'arrêt (5) est plus grande en surface.

5. Couche d'arrêt conforme à la revendication 1, **caractérisée en ce que**, dans la couche d'arrêt (5), la porosité diminue en direction de l'intérieur.

6. Couche d'arrêt conforme à l'une des revendications 1 à 5, **caractérisée en ce qu'**elle est en un matériau constitué d'oxyde de cérium et/ou d'oxyde de cérium technique et/ou d'oxyde de cérium dopé et/ou d'oxyde de zirconium et/ou d'oxyde de zirconium technique et/ou d'oxyde de zirconium dopé, ou de mélanges de ces matériaux.

7. Couche d'arrêt conforme à la revendication 6, **caractérisée en ce que** le matériau contient des oxydes de samarium et de gadolinium, en tant que dopants.

8. Couche d'arrêt conforme à l'une des revendications 1 à 7, **caractérisée en ce que** la couche d'arrêt (5) est déposée sur tout ou partie d'au moins une surface de l'électrolyte (1) ou de l'anode (2) ou de la cathode (3).
